# EUROPÄISCHE PATENTSCHRIFT

(11) **EP 1 234 462 B1**
(45) Veröffentlichungstag und Bekanntmachung des Hinweises auf die Patenterteilung: **16.04.2003**
(21) Anmeldenummer: 99955633.5
(22) Anmeldetag: 30.11.1999
(51) Int. Cl.: H04Q 7/24, H04Q 3/00

(54) **VERFAHREN UND VORRICHTUNG FÜR DIE VERBINDUNG VON KOMMUNIKATIONSNETZEN**
METHOD AND DEVICE FOR CONNECTING COMMUNICATION NETWORKS
PROCEDE ET DISPOSITIF POUR CONNECTER DES RESEAUX DE COMMUNICATION

(43) Veröffentlichungstag der Anmeldung: 28.08.2002
(73) Patentinhaber: Swisscom Mobile AG, 3050 Bern (CH)
(72) Erfinder: CAVIN, Ernest, CH-2540 Grenchen (CH); STADELMANN, Anton, Niklaus, CH-3065 Bolligen (CH); ARM, Erich, CH-3027 Bern (CH); AJANIC, Srecko, 3178 Bösingen (CH)
(74) Vertreter: BOVARD AG - Patentanwälte
(86) Internationale Anmeldenummer: CH9900571
(87) Internationale Veröffentlichungsnummer: WO01041476

(56) Entgegenhaltungen:
- WO-A-00/18143
- WO-A-98/03028
- WO-A-99/29124

## Beschreibung

Die vorliegende Erfindung betrifft ein Verfahren und eine Vorrichtung für die Verbindung von Kommunikationsnetzen, insbesondere betrifft sie ein Verfahren und eine Vorrichtung um Signalisierungsdaten zwischen Mobilnetzen auszutauschen.

Vom internationalen beratenden Ausschuss für Telegrafie und Telefonie, CCITT, wurde ein internationaler Signalisierungs-Standard, das Signalisierungssystem Nr. 7 (SS7) für die Kommunikation zwischen (nationalen) Telefon- und Telegrafienetzwerken entwickelt. Insbesondere auch in Mobilnetzen wird die SS7-Signalisierung als Grundlage verwendet, um beispielsweise zwischen Schaltzentrale (Mobile Switching Center, MSC), Home Location Register (HLR) und Visitor Location Register (VLR) Meldungen des Mobile Application Part (MAP-Meldungen) auszutauschen. Eine Anbindung eines fremden Mobilnetzes an ein inländisches Mobilnetz über SS7-Signalisierung ist deshalb insbesondere auch für Roaming-Zwecke vorteilhaft und erforderlich. Allerdings sind zur Zeit nicht in allen Ländern SS7-Signalisierungsplattformen verfügbar oder zugänglich.

Die Patentanmeldung WO 97/50217 beschreibt einen bidirektionalen Gateway für Protokollkonversionen zwischen SS7- und Nicht-SS7-Protokollen. Für Inbound-Dienste übersetzt der in WO 97/50217 beschriebene Gateway eine SS7-Anfrage vollständig in ein verbindungsorientiertes Nicht-SS7-Protokoll und sendet eine Antwort zurück, die vom Nicht-SS7-Protokoll in SS7 übersetzt wurde. Dabei entfernt der Gateway, beispielsweise für Inbound-Dienste, die Protokolldatenteile der unteren SS7-Protokollschichten Message Transfer Part (MTP) und Signalling Connection Control Part (SCCP), dekodiert die Protokolldateneinheit der SS7-Anwendungsschicht Transaction Capabilities Application Part (TCAP), erzeugt auf Grund der aus der Dekodierung erhaltenen Parameter ein Nicht-SS7-Paket und routet dieses Nicht-SS7-Paket über das User Datagram Protokoll (UDP) und das Internet Protokoll (IP). Für Outbound-Dienste funktioniert der Gateway in umgekehrter Weise. Ein solcher Gateway hat den Nachteil, dass seine Entwicklung sehr aufwendig ist, und dass er bezüglich Änderungen in der Anwendungsebene inflexibel ist und ständig an solche Änderungen angepasst werden muss, was neben Programmierungsarbeit auch Probleme der Versionenkontrolle und Implementierung, möglicherweise in verschiedenen Ländern, mit sich zieht, was zudem sehr kostspielig sein kann.

In der Patentanmeldung WO 99/29124 wird ein Verfahren beschrieben, um den SS7-Protokollstapel in einem Ursprungsknoten und in einem Zielknoten so zu ändern, dass SS7-Signalisierungsdaten vom Ursprungsknoten über ein Datennetzwerk, beispielsweise ein Internet-Netzwerk, an den Zielknoten übertragen werden können. Gemäss WO 99/29124 werden im Ursprungs- und Zielknoten jeweils die MTP-Protokollschicht der SS7-Protokollstapel durch eine IP-Protokollschicht ersetzt und darüber eine Abbildungsfunktion eingefügt, die die SS7-Signalisierungsdaten von der SCCP-Protokollschicht auf Datenmeldungen der IP-Protokollschicht abbildet Gemäss WO 99/29124 werden zudem den Ursprungs- und Zielknoten jeweils eine SS7-Adresse und eine IP-Adresse zugeordnet und in einer Adressabbildungstabelle gespeichert, die durch die oben genannten Abbildungsfunktion verwendet wird.

In der Patentanmeldung WO 98/03028 werden ein Verfahren und eine Vorrichtung beschrieben, die das Roaming einer Mobilstation, beispielsweise ein GSM-Mobilfunktelefon (Global System for Mobile Communication), über die Grenzen einer Mikrozelle unterstützt, beispielsweise eine DECT-Mikrozelle (Digital European Cordless Telephone), wobei Mobilitätsinformationen mittels MAP/TCP-Schnittstellen (Transaction Control Protocol) über eine Internet-Verbindung übertragen werden.

Es ist eine Aufgabe dieser Erfindung, eine neue und bessere Vorrichtung und ein neues und besseres Verfahren vorzuschlagen, um Signalisierungsdaten zwischen Mobilnetzen auszutauschen, wobei insbesondere ermöglicht wird, fremde Mobilnetze, die über keine international zugängliche Signalisierungssystemplattform verfügen, beispielsweise eine Plattform für das SS7-Signalisierungssystem, an ein inländisches Mobilnetz anzubinden und diese Mobilnetze überdies untereinander zu verbinden.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass Signalisierungsdaten, die zwischen Mobilnetzen ausgetauscht werden, wobei die Signalisierungsdaten üblicherweise von einer ersten Netzwerkeinheit, die mit einem ersten Mobilnetz verbunden ist, mittels eines Signalisierungssystems an eine zweite Netzwerkeinheit, die mit einem zweiten Mobilnetz verbunden ist, übermittelt werden, und wobei eine Netzwerkeinheit beispielsweise ein Mobile Switching Center (MSC), ein Home Location Register (HLR) oder ein Visitor Location Register (VLR) ist, von einer ersten Interworking-Vorrichtung, die mit dem Signalisierungssystem des ersten Mobilnetzes verbunden ist, direkt von diesem Signalisierungssystem entgegengenommen werden, dass durch die erste Interworking-Vorrichtung Routinginformationen aus Protokolldateneinheiten dieses Signalisierungssystems extrahiert werden, beispielsweise aus MTP-Protokolldateneinheiten und/oder aus SCCP-Protokolldateneinheiten eines SS7-Signalisierungssystems, dass die erste Interworking-Vorrichtung auf Grund der extrahierten Routinginformationen aus einer Routing-Tabelle eine Zieladresse in einem Internet-Netzwerk bestimmt, vorzugsweise das wellweit zugängliche Internet oder eine andere Kommunikationsverbindung basierend auf dem Internet-Protokoll (IP), und dass die entgegengenommenen Signalisierungsdaten von der ersten Interworking-Vorrichtung unter Verwendung der bestimmten Zieladresse direkt als Nutzdaten über das Internet-Netzwerk an die zweite Netzwerkeinheit weitergeleitet werden. Zusätzlich zum Resultat, dass man auf diese Weise fremde Mobilnetze, die über keine international zugängliche Signalisierungssystemplattform verfügen, beispielsweise eine Plattform für das SS7-Signalisierungssystem, an ein inländisches Mobilnetz anbinden kann, hat dies den Vorteil, dass man dabei auf kostspielige Übertragungsleitungen, beispielsweise Mietleitungen, verzichten kann, da die Signalisierungsdaten vorzugsweise über das weltweit zugängliche Internet, oder ein zukünftiges ähnliches Telekommunikationsnetz, übertragen werden können. Zudem hat diese Lösung den Vorteil, dass man keine aufwendigen Gateways benötigt, da die Signalisierungsdaten in der Interworking-Vorrichtung ohne Protokollkonversionen als Nutzdaten über das Internet-Netzwerk übertragen werden. Die Verwendung von Routinginformationen aus Protokolldateneinheiten des Signalisierungssystems, und die Bestimmung einer Zieladresse im Internet-Netzwerk auf Grund dieser Routinginformationen und auf Grund der in einer Routing-Tabelle gespeicherten Informationen, vorzugsweise eine Routing-Tabelle in der Interworking-Vorrichtung, hat zudem den Vorteil, dass Mobilnetze für den Austausch von Signalisierungsdaten nicht nur paarweise über vordefinierte Punkt-zu-Punkt Verbindungen im Internet-Netzwerk verbunden werden können, sondern dass mehrere Mobilnetze ihre Signalisierungsdaten direkt untereinander über das Internet-Netzwerk austauschen können. Die vorliegende Erfindung ermöglicht also ein virtuelles Signalisierungsnetz, über welches Mobilnetze, die beispielsweise über kein international zugängliches Signalisierungssystem verfügen, Signalisierungsdaten direkt untereinander austauschen können.

Vorzugsweise werden die über das Internet-Netzwerk übertragenen Nutzdaten durch eine zweite Interworking-Vorrichtung empfangen, und durch die zweite Interworking-Vorrichtung zur Weiterleitung an die zweite Netzwerkeinheit direkt als Signalisierungsdaten an das mit der zweiten Netzwerkeinheit verbundene Signalisierungssystem des zweiten Mobilnetzes weitergeleitet. Auf diese Weise können Signalisierungsdaten in beiden Richtungen zwischen den Signalisierungssystemen eines ersten und eines zweiten Mobilnetzes ausgetauscht werden, wobei die Signalisierungsdaten in den Interworking-Vorrichtungen ohne Protokollkonversionen als Nutzdaten über das Internet-Netzwerk übertragen werden, respektive vom Internet-Netzwerk auf das Signalisierungssystem, übertragen werden.

Vorzugsweise werden von der ersten Interworking-Vorrichtung zusätzlich Netzwerkmanagement-Informationen aus dem Signalisierungssystems des ersten Mobilnetzes erfasst, beispielsweise Netzwerkmanagement-Informationen aus der MTP-Protokollebene (Message Transfer Part), und zusammen mit den Signalisierungsdaten direkt als Nutzdaten über das Internet-Netzwerk übertragen. Die übertragenen Netzwerkmanagement-Informationen werden durch die zweite Interworking-Vorrichtung über das Internet-Netzwerk empfangen und in der zweiten Interworking-Vorrichtung ausgewertet.

In einer bevorzugten Ausführungsvariante sind die Mobilnetze GSM-Netze (Global System for Mobile Communication) und/oder UMTS-Netze (Universal Mobile Telephone System), welche für den Austausch von Signalisierungsdaten, insbesondere Meldungen des Mobile Application Part (MAP-Meldungen), SS7-Signalisierungssysteme verwenden.

Vorzugsweise werden die MAP-Meldungen in MAP-Protokolldateneinheiten zusammen mit den Protokolldateneinheiten des Transaction Capabilities Application Part (TCAP) und des Signalling Connection Control Parts (SCCP) als Nutzdaten übertragen, das heisst, die MAP-Protokolldateneinheiten, die die MAP-Meldungen enthalten, werden als Bestandteil der TCAP-Protokolldateneinheiten in den SCCP-Protokolldateneinheiten direkt und unverändert als Nutzdaten über das Internet-Netzwerk übertragen. Wie oben schon erwähnt wurde, ist es diese direkte Übertragung von unveränderten Protokolldateneinheiten, die eine Lösung ohne komplexe Gateways ermöglicht.

In einer bevorzugten Ausführungsvariante enthalten mindestens gewisse Signalisierungsdaten, die beispielsweise zwischen einem VLR eines ersten Mobilnetzes und einem HLR eines zweiten Mobilnetzes ausgetauscht werden, Roaming-Informationen, das heisst Informationen, die im Zusammenhang mit Roaming benötigt werden, beispielsweise die Aktualisierung des Aufenthaltsorts (Location Update) oder die Anforderung einer Roaming-Nummer (Roaming Number Request).

In verschiedenen Varianten, beispielsweise in Abhängigkeit der zu übertragenden Signalisierungsdaten, werden die Nutzdaten mittels dem Transaction Control Protocol (TCP) oder mittels User Datagram Protocol (UDP) über ein Internet-Netzwerk (IP) übertragen.

In einer bevorzugten Variante werden die Interworking-Vorrichtungen jeweils über mindestens einen Internet-Dienstanbieter mit dem Internet-Netzwerk, insbesondere das weltweit zugängliche Internet, verbunden.

In einer bevorzugten Variante werden die aus dem genannten Internet-Netzwerk empfangenen Daten aus Sicherheitsgründen gefiltert, beispielsweise mittels einem Firewall-Modul in der Interworking-Vorrichtung.

An dieser Stelle soll festgehalten werden, dass sich die vorliegende Erfindung neben dem erfindungsgemässen Verfahren auch auf eine Interworking-Vorrichtung bezieht, mittels welcher das erfindungsgemässe Verfahren ausgeführt werden kann.

Nachfolgend wird eine Ausführung der vorliegenden Erfindung anhand eines Beispieles beschrieben. Das Beispiel der Ausführung wird durch folgende beigelegten Figuren illustriert:
Fig. 1 zeigt ein Blockdiagramm, welches die Verbindung zwischen mit Mobilnetzen verbundenen Netzwerkeinheiten über Interworking-Vorrichtungen und ein Internet-Netzwerk illustriert.
Fig. 2 zeigt ein Blockdiagramm, welches die Protokollschichten in zwei der Netzwerkeinheiten sowie in den zugehörigen Interworking-Vorrichtungen illustriert.

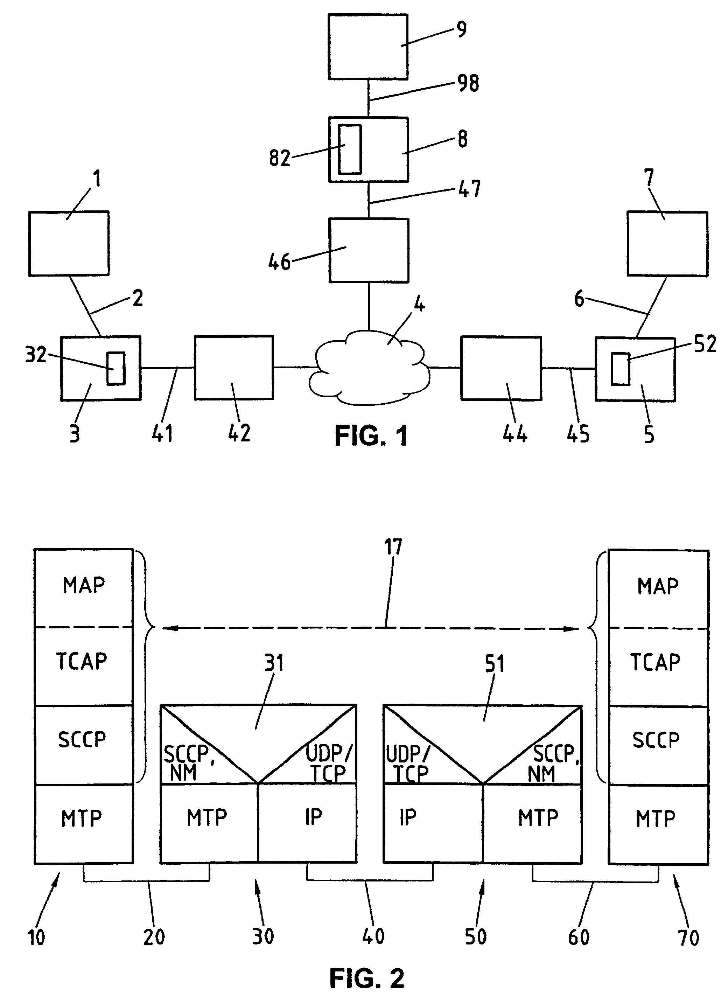

In der Figur 1 beziehen sich die Bezugszeichen 1, 7 und 9 auf Netzwerkeinheiten eines Mobilfunknetzes, zum Beispiel ein Home Location (HLR) Register, ein Visitor Location Register (VLR) oder ein Mobile Switching Center (MSC) in einem GSM-Netz oder UMTS-Netz, wobei diese Netzwerkeinheiten 1, 7 und 9 auch das jeweilige damit verbundene Mobilfunknetz 1, 7 und 9 repräsentieren.

Die Bezugszeichen 3, 5 und 8 beziehen sich auf Interworking-Vorrichtungen, beispielsweise handelsübliche Server, die über eine schematisch dargestellte Signalisierungsverbindung 2, 6, respektive 98, mit den oben erwähnten Netzwerkeinheiten 1, 7, respektive 9, verbunden sind. Die schematisch dargestellten Signalisierungsverbindungen 2, 6 und 98 sind Teil eines Signalisierungssystems, zum Beispiel ein CCITT Signalisierungssystem Nr. 7 (SS7), dessen Protokollschichten in Figur 2 etwas detaillierter dargestellt sind.

In der Figur 2 beziehen sich die Bezugszeichen 20 und 60 auf die untersten Schichten des SS7-Signalisierungssystems, welche insbesondere auch die in der Figur 1 schematisch dargestellten physikalischen Verbindungen 2, respektive 6, zwischen der Netzwerkeinheit 1 und der Interworking-Vorrichtung 3, respektive zwischen der Netzwerkeinheit 7 und der Interworking-Vorrichtung 5, umfassen. Wie in der Figur 2 dargestellt ist, sind die Protokollstapel 10 und 70 über die Verbindungen 20, respektive 60, mit den Protokollstapeln 30, respektive 50, verbunden, wobei die Protokollstapel 30 und 50 in den in der Figur 1 dargestellten Interworking-Vorrichtungen 3, respektive 5, realisiert sind. An dieser Stelle soll zum besseren Verständnis erwähnt werden, das die in der Figur 1 dargestellte Interworking-Vorrichtung 8 so ausgeführt ist, wie dies für die Interworking-Vorrichtungen 3 und 5 in der Figur 2 dargestellt ist.

Die Bezugszeichen 10 und 70 beziehen sich auf Protokollstapel, welche in den Netzwerkeinheiten 1, respektive 7, realisiert sind. Die schematisch dargestellten Protokollstapel umfassen standardmässige Protokollschichten des SS7-Signalisierungssystems, insbesondere den Message Transfer Part MTP, den Signalling Connection Control Part SCCP und den Transaction Capabilities Application Part TCAP, sowie die Protokollschicht des Mobile Application Part MAP, welche von Netzwerkeinheiten in Mobilnetzen, zum Beispiel ein Home Location Register (HLR), ein Visitor Location Register (VLR) oder ein Mobile Switching Center (MSC) in einem GSM-Netz oder UMTS-Netz, zur Übermittlung von MAP-Meldungen verwendet wird. In der Figur 2 sind die MAP- und TCAP-Protokollebenen im Protokollstapel 10, 70 nur durch eine gestrichelte Linie getrennt, dadurch wird angedeutet, dass die beiden Protokollebenen zur Anwendungsebene gehören. Wie durch die geschweiften Klammem und durch den gestrichelten Doppelpfeil 17 in der Figur 2 angedeutet wird, werden die MAP-, TCAP- und SCCP-Protokolldateneinheiten gemäss dem erfindungsgemässen Verfahren zusammen als Nutzdaten übertragen werden, wie wir später beschreiben werden.

In der folgenden Beschreibung werden wir das Bezugszeichen eines bestimmten Protokollstapels mit der Bezeichnung einer bestimmten Protokollebene kombinieren, wenn wir uns auf eine bestimmte Protokollebene in einem bestimmten Protokollstapel beziehen möchten, zum Beispiel bezieht sich das Bezugszeichen 10-SCCP auf die SCCP-Protokollebene im Protokollstapel 10, der in der Netzwerkeinheit 1 realisiert ist.

Die Interworking-Vorrichtung 3 umfasst ein Signalisierungsmodul, welches programmierte Kommunikationssoftware und Hardwaremittel umfasst, um die unteren Protokollebenen des SS7-Signalisierungssystems bis und mit der MTP-Protokollebene, oder in einer anderen Ausführung bis und mit der SCCP-Protokollebene, zu realisieren. Mit wenigen Ausnahmen, auf die wir später eingehen werden, kann dies eine standardmässige Ausführung bis und mit der MTP-Protokollebene, respektive SCCP-Protokollebene, sein. Wie dies in der Figur 2 angedeutet ist, umfasst das Signalisierungsmodul somit die Funktionalität, um an die Interworking-Vorrichtung 3 adressierte Daten über die Signalisierungsverbindung 20 entgegenzunehmen und, entsprechend dem Standard des SS7-Signalisierungssystems, die jeweiligen empfangenen Protokolldateneinheiten an die nächst höhere MTP-Protokollebene 30-MTP, und gegebenenfalls SCCP-Protokollebene 30-SCCP, weiterzugeben, so dass die SCCP-Protokolldateneinheit zusammen mit der TCAP-Protokolldateneinheit und MAP-Protokolldateneinheit über eine geeignete Schnittstelle einem Relaismodul 31 übergeben werden kann.

Wie in der Figur 2 für die Protokollstapel 30 und 50 illustriert wird, umfasst das Signalisierungsmodul zudem ein Netzwerkmanagement-Modul NM, beispielsweise ein programmiertes Softwaremodul, das als Benutzer der MTP-Protokollebene Netzwerkmanagement-Informationen von der MTP-Protokollebene mittels MTP-Primitiven (beispielsweise Request und Indication Primitiven) der MTP-Protokollebene entgegennimmt und über die erwähnte Schnittstelle dem Relaismodul 31 übergibt.

Zusätzlich wird das Signalisierungsmodul mit programmierten Funktionen ausgestattet, welche es erlauben, auf der MTP-Protokollebene 30-MTP und/oder auf der SCCP-Protokollebene 30-SCCP Routinginformationen zu extrahieren, beispielsweise Angaben über den Destination-STP (Destinations Signalling Transfer Point) und den Originating-STP (Ursprungs Signalling Transfer Point) aus der MTP-Protokolldateneinheit und/oder aus der SCCP-Protokolldateneinheit, zum Beispiel eine Adresse, insbesondere eine A.164 Adresse, und ebenfalls über die erwähnte Schnittstelle dem Relaismodul 31 zu übergeben.

Das beschriebene Signalisierungsmodul verfügt zudem über die Funktionalität Nutzdaten, beispielsweise SCCP-Protokolldateneinheiten zusammen mit TCAP-Protokolldateneinheiten und MAP-Protokolldateneinheiten, sowie die erwähnten Netzwerkmanagement-Informationen, über die erwähnte Schnittstelle entgegenzunehmen und die SCCP- Protokolldateneinheiten zusammen mit den TCAP-Protokolldateneinheiten und MAP-Protokolldateneinheiten in umgekehrter Richtung über die unteren Protokollschichten des SS7-Signalisierungssystems zu übertragen und die Netzwerkmanagement-Informationen zur Auswertung und eventuellen Behandlung dem Netzwerkmanagement-Modul NM zu übergeben.

Das Relaismodul 31 ist ein programmiertes Softwaremodul, welches in der Interworking-Vorrichtung 3 realisiert ist und Zugriff auf einen Speicherbereich 32 hat. Das Relaismodul 31 kann auf die Schnittstelle des oben beschriebenen Signalisierungsmoduls zugreifen und über diese Schnittstelle SCCP-Protokolldateneinheiten zusammen mit TCAP-Protokolldateneinheiten und MAP-Protokolldateneinheiten, sowie die oben erwähnten Netzwerkmanagement-Informationen und Routinginformationen entgegennehmen, und in umgekehrter Richtung SCCP-Protokolldateneinheiten zusammen mit TCAP-Protokolldateneinheiten und MAP-Protokolldateneinheiten sowie die Netzwerkmanagement-Informationen dem Signalisierungsmodul übergeben. Das Relaismodul 31 hat Zugriff auf eine im erwähnten Speicherbereich 32 abgelegte Routing-Tabelle, in welcher Routing-Tabelle 32 Angaben über Destination-STP abgespeichert sind, denen jeweils mindestens eine abgespeicherte Zieladresse im Internet-Netzwerk 4 zugeordnet ist, beispielsweise die Intemetadresse der Interworking-Vorrichtung 5, respektive 8, die für die Übermittlung von Nutzdaten an die Interworking-Vorrichtung 5, respektive 8, über das Internet-Netzwerk 4 verwendet werden kann. Auf Grund der vom Signalisierungsmodul entgegengenommenen Routing-Informationen, insbesondere auf Grund der Angaben über den Destination-STP, bestimmt das Relaismodul 31 aus der Routing-Tabelle 32 die Zieladresse im Internet-Netzwerk 4, an welche die Nutzdaten über das Internet-Netzwerk 4 übermittelt werden, um von dort an den betreffenden Destination-STP weitergeleitet werden zu können.

Der Inhalt der Routing-Tabelle 32 kann mittels dem Fachmann bekannten Mitteln, beispielsweise über eine grafische Benutzeroberfläche eines entsprechend ausgeführten Softwaremoduls, verwaltet werden, wobei dies für die verschiedenen Interworking-Vorrichtungen 3, 5 und 8 jeweils lokal oder über ein Telekommunikationsnetz, beispielsweise über das Internet-Netzwerk 4, von einer nicht dargestellten Zentrale aus durchgeführt werden kann. Eine Aktualisierung der Routing-Tabellen 32, 52, 82 kann beispielsweise auch durch entsprechende Funktionen in den Interworking-Vorrichtungen 3, 5, 8 initiiert und, beispielsweise direkt oder über die erwähnte Zentrale, auf die anderen Interworking-Vorrichtungen 3, 5, 8 übertragen werden.

Das Relaismodul 31 hat zudem Zugriff auf eine Schnittstelle zu einem Internetmodul, über welche sie Nutzdaten an dieses Intemetmodul übergeben, zum Beispiel zusammen mit der oben erwähnten Zieladresse, oder vom Internetmodul übernehmen kann. Die SCCP-Protokolldateneinheiten zusammen mit TCAP-Protokolldateneinheiten und MAP-Protokolldateneinheiten, sowie die oben erwähnten Netzwerkmanagement-Informationen, die alle vom Signalisierungsmodul entgegengenommen wurden, werden vom Relaismodul 31 auf dem Fachmann bekannte Weise zu einer Zeichenkette (String) zusammengefasst, ohne dass dabei die Protokolldateneinheiten zerlegt oder verändert werden, und über die oben erwähnte Schnittstelle dem Intemetmodul übergeben. In umgekehrter Richtung entnimmt das Relaismodul 31 den vom Internetmodul entgegengenommenen Nutzdaten die SCCP-Protokolldateneinheiten zusammen mit TCAP-Protokolldateneinheiten und MAP-Protokolldateneinheiten, sowie die oben erwähnten Netzwerkmanagement-Informationen, und übergibt diese, wie oben erwähnt dem Signalisierungsmodul. Der Klarheit halber soll hier nochmals betont werden, dass das Relaismodul 31 eine SCCP-Protokolldateneinheit mit einer TCAP-Protokolldateneinheit, welche eine MAP-Protokolldateneinheit mit einer MAP-Meldung enthält, nicht verändert und/oder zerlegt sondern vom Signalisierungsmodul entgegennimmt und direkt als Nutzdaten dem Intemetmodul übergibt, respektive vom Intemetmodul entgegennimmt und direkt dem Signalisierungsmodul übergibt.

Das Internetmodul ist ebenfalls in der Interworking-Vorrichtung 3 realisiert und umfasst handelsübliche programmierte Kommunikationssoftware und Hardwaremittel um das User Datagram Protocol (UDP) 30-UDP und/oder das Transmission Control Protocol (TCP) 30-TCP zu realisieren und um auf ein Internet-Netzwerk 40 (respektive 4) zugreifen zu können. Das Intemetmodul umfasst somit die Funktionalität, um an die Interworking-Vorrichtung 3 adressierte Datenpakete über ein Internet-Netzwerk 4 über UDP-IP und/oder TCP-IP entgegenzunehmen und darin enthaltene Nutzdaten beispielsweise über eine geeignete Schnittstelle dem Relaismodul 31 zu übergeben, respektive um Nutzdaten beispielsweise über diese Schnittstelle vom Relaismodul 31 entgegenzunehmen und über UDP-IP und/oder TCP-IP über ein Internet-Netzwerk 4 an die oben erwähnte Zieladresse zu übermitteln, wobei diese Zieladresse vorzugsweise vom Relaismodul 31 dem Intemetmodul übergeben wird.

Die Funktionalität und Ausführung der Interworking-Vorrichtungen 5 und 8 entspricht der Interworking-Vorrichtung 3, wobei in der Routing-Tabelle im Speicherbereich 52, respektive 82, allenfalls andere Routing-Informationen gespeichert sind.

Wie in Figur 2 schematisch dargestellt ist sind die Intemetmodule der Interworking-Vorrichtung 3 und 5 über eine Intemetverbindung 40 miteinander verbunden. Diese Intemetverbindung, die auf herkömmliche Weise über ein Internet-Netzwerk 4 erstellt wird, vorzugsweise durch Internet-Dienstanbieter des weltweit zugänglichen Internets (World Wide Web), ist in Figur 1 ausführlicher dargestellt. Die Bezugszeichen 41, 45 und 47 beziehen sich auf physikalische Netzwerkverbindungen zwischen der Interworking-Vorrichtung 3 und einem Internet-Dienstanbieter (Internet Service Provider, ISP) 42, zwischen der Interworking-Vorrichtung 5 und einem Internet-Dienstanbieter 44, respektive zwischen der Interworking-Vorrichtung 8 und einem Internet-Dienstanbieter 46. Die Internet-Dienstanbieter 42, 44 und 46 stellen den Interworking-Vorrichtungen 3, 5, 8 den Zugang zum Internet-Netzwerk 4 bereit, vorzugsweise das weltweit zugängliche Internet.

Nachdem oben vor allem der Aufbau und die Funktionalität der Interworking-Vorrichtungen 3, 5 und 8 beschrieben wurden, soll nun in den folgenden Abschnitten der Austausch von Signalisierungsdaten zwischen zwei Netzwerkeinheiten 1, 7, 9 gemäss dem erfindungsgemässen Verfahren an einem Beispiel beschrieben werden.

Eine (anrufende, calling) Netzwerkeinheit 1, zum Beispiel ein Home Location Register (HLR), ein Visitor Location Register (VLR) oder ein Mobile Switching Center (MSC) in einem GSM-Netz oder UMTS-Netz, die Signalisierungsdaten, beispielsweise eine MAP-Meldung, über das SS7-Signalisierungssystem an eine andere (angerufene, called) Netzwerkeinheit 7 senden will, die sich beispielsweise in einem fremden Land ohne international zugängliche oder verfügbare SS7-Plattform befindet, kann die MAP-Meldung wie üblich mit der Adresse der angerufenen Netzwerkeinheit 7, zum Beispiel deren globalen Titel (Global Title), über das SS7-Signalisierungssystem absetzen, wobei die MAP-Meldung von der MAP-Protokollebene 10-MAP, über die TCAP-, SCCP - und MTP-Protokollschichten 10-TCAP, 10-SCCP und 10-MTP des SS7-Signalisierungssystems weitergeleitet wird. Wie üblich im SS7-Signalisierungssystem wird der Global Title der angerufenen Netzwerkeinheit 7 entweder in der anrufenden Netzwerkeinheit 1, zum Beispiel im HLR, oder in einem nicht dargestellten Signalling Transfer Point (STP) analysiert und die MAP-Meldung mit den SS7-Protokolldateneinheiten, im Beispiel der Figur 2 über die schematisch dargestellte physikalische Verbindung 2, an die Interworking-Vorrichtung 3 weitergeleitet, wo sie vom oben beschriebenen Signalisierungsmodul der Interworking-Vorrichtung 3 entgegengenommen wird.

Wie oben beschrieben wurde, übergibt das Signalisierungsmodul in der Interworking-Vorrichtung 3 die empfangene SCCP-Protokolldateneinheit zusammen mit der TCAP-Protokolldateneinheit und MAP-Protokolldateneinheit, die die MAP-Meldung enthält, sowie die Routing-Informationen und Netzwerkmanagement-Informationen an das oben beschriebene Relaismodul 31. Wie oben beschrieben bestimmt das Relaismodul 31 basierend auf den erhaltenen Routing-Informationen die Zieladresse im Internet-Netzwerk 4, im Beispiel der Figur 2 die Intemetadresse der Interworking-Vorrichtung 7, und übergibt die SCCP-Protokolldateneinheit zusammen mit der TCAP-Protokolldateneinheit und MAP-Protokolldateneinheit, sowie die Netzwerkmanagement-Informationen, als Nutzdaten an das oben beschrieben Internetmodul der Interworking-Vorrichtung 3.

Das Intemetmodul der Interworking-Vorrichtung 3 übermittelt, wie oben beschrieben, die vom Relaismodul 31 erhaltenen Nutzdaten über das Internet-Netzwerk 4 (in der Figur 2 durch die Internetverbindung 40 repräsentiert) an das Intemetmodul der Interworking-Vorrichtung 5. Dabei können in einer Variante, in Abhängigkeit des MAP-Meldungstyps, der beispielsweise in einer zusätzlichen Funktion im Relaismodul 31 bestimmt wird, die UDP-IP Protokolle, beispielsweise für Meldungen ohne Sequenzkontrolle, oder die TCP-IP Protokolle, beispielsweise für Meldungen mit Sequenzkontrolle, verwendet werden.

Das Internetmodul der Interworking-Vorrichtung 5 empfängt die oben beschriebenen Nutzdaten über das Internet-Netzwerk 4 (respektive über die in der Figur 2 dargestellte Internetverbindung 40) und übergibt sie dem Relaismodul 51, welches den Nutzdaten die SCCP-Protokolldateneinheit zusammen mit der TCAP-Protokolldateneinheit und MAP-Protokolldateneinheit, sowie die Netzwerkmanagement-Informationen entnimmt und an das Signalisierungsmodul der Interworking-Vorrichtung 5 weiterleitet.

Vom Signalisierungsmodul der Interworking-Vorrichtung 5 werden die erhaltenen Netzwerkmanagement-Informationen wie oben beschrieben im Netzwerkmanagement-Modul NM ausgewertet, wobei nötigenfalls vom Netzwerkmanagement-Modul NM Schritte zur Behebung von Problemen in herkömmlicher Weise eingeleitet werden, und die erhaltene SCCP-Protokolldateneinheit zusammen mit der TCAP-Protokolldateneinheit und MAP-Protokolldateneinheit an die MTP-Protokollebene 50-MTP, respektive SCCP-Protokollebene 50-SCCP, zur Übertragung über die unteren Protokollschichten des SS7-Signalisierungssystems übergeben.

Im SS7-Signalisierungssystem wird die MAP-Meldung mit den SS7 Protokolldateneinheiten, in diesem Beispiel über die schematisch dargestellte physikalische Verbindung 6, an die Netzwerkeinheit 7 weitergeleitet, wo sie von deren standardmässigen SS7-Signalisierungssystem entgegengenommen wird und wo auf der MAP-Protokollebene 70-MAP die von der Netzwerkeinheit 1 übermittelte MAP-Meldung der MAP-Protokolldateneinheit entnommen wird.

Wie in diesem Beispiel beschrieben wurde ist es also mit dem erfindungsgemässen Verfahren und der erfindungsgemässen Interworking-Vorrichtung möglich, von einer (anrufenden, calling) Netzwerkeinheit 1 (oder 7, respektive 9) eine MAP-Meldung abzuschicken, die in einer MAP-Protokolldateneinheit als Bestandteil einer TCAP-Protokolldateneinheit, respektive einer SCCP- Protokolldateneinheit, wie in der Figur 2 mit dem gestrichelten Doppelpfeil 17 angedeutet wird, unverändert an eine (angerufene, called) Netzwerkeinheit 7 (oder 1) übertragen wird, die sich beispielsweise in einem Land ohne international zugänglichem SS7-Signalisierungssystem befindet. Damit kann eine solche Netzwerkeinheit 7 (oder 1) und das damit verbundene Mobilnetz an die Netzwerkeinheit 1 (oder 7) und das damit verbundene Mobilnetz angebunden werden. Zum Beispiel kann die Netzwerkeinheit 1 ein VLR 1 in einem fremden Land ohne international zugänglichem oder verfügbarem SS7-Signalisierungssystem sein, welches VLR mit dem erfindungsgemässen Verfahren und erfindungsgemässen Interworking-Vorrichtungen ein Location-Update-Meldung an das HLR 7 eines Benutzers sendet, der sein Mobilgerät, zum Beispiel ein Mobilfunktelefon, beispielsweise vom GSM- oder UMTS-Typ, im genannten Land aktiviert hat, oder in umgekehrter Richtung kann das HLR 7 eine Roaming-Number-Request-Meldung an das VLR 1 senden.

An dieser Stelle sollte auch erwähnt werden, dass Daten, die über das genannte Internet-Netzwerk 4 empfangen werden, aus Sicherheitsgründen gefiltert werden, beispielsweise mit einem Firewall-Modul, welches vom Fachmann beispielsweise als Softwaremodul auf der Interworking-Vorrichtung 3, 5, 8 implementiert wird, oder auf einer separaten Hardwareplattform, zum Beispiel ein Server, die jeweils zwischen den Intemet-Dienstanbieter 42, 44, respektive 46 und die Interworking-Vorrichtung 3, 5, respektive 8 installiert wird.

Als Backup für Kommunikation über das Internet-Netzwerk 4 können die Interworking-Vorrichtungen 3, 5, 8 zudem mit Zugang zum öffentlichen geschalteten Telefonnetz (Public Switched Telephone Network, PSTN), zum ISDN-Netzwerk (Integrated Services Digital Network) und oder zu mehreren Intemet-Dienstanbietem ausgestattet werden, so dass dem Relaismodul 31, 51 der Interworking-Vorrichtungen 3, 5 bei Problemen auf dem Internet oder beim betreffenden Internet-Dienstanbieter 42, 44, beispielsweise wenn die Dienstqualität nicht einer vordefinierten Mindestqualität entspricht, Übertragungsalternativen zur Verfügung stehen, auf die beispielsweise gemäss vordefinierten Qualitätskriterien automatisch umgeschaltet wird.

Obwohl dies nicht im Detail beschrieben wurde, ist es auch möglich, die oben erwähnte Zeichenkette (String) zur Übertragung der Nutzdaten so zu erweitern, dass gleichzeitig mehrere MAP-Dialoge, das heisst mehrere MAP-Meldungen, die möglicherweise von mehreren verschiedenen anrufenden Netzwerkeinheiten an mehrere verschiedene angerufenen Netzwerkeinheiten übertragen werden sollen, gemäss dem beschriebenen Verfahren übermittelt werden können. Durch diese parallelen MAP-Dialoge kann, insbesondere bei grossem Signalisierungsverkehr zwischen den betreffenden Netzwerkeinheiten, die Durchsatzrate der Nutzdaten erhöht und die durchschnittliche End-zu-End-Übertragungszeit für den Austausch von Signalisierungsdaten zwischen den betreffenden Netzwerkeinheiten reduziert werden.

Wie oben beschrieben wurde ist es, beispielsweise für einen Netzwerkbetreiber, möglich, mittels dem beschriebenen Verfahren und den beschriebenen Vorrichtungen interessierten Kunden Roamingdienste in fremden Ländern anzubieten, in welchen keine SS7-Signalisierungsplattformen international zugänglich oder verfügbar sind.

Auch wenn das Ausführungsbeispiel sich nur auf ein SS7-Signalisierungssystem bezieht wird der Fachmann verstehen, dass sich die Erfindung auch auf andere Signalisierungssysteme anwenden lässt, und/oder dass damit ausser MAP-Meldungen auch andere Signalisierungsdaten ausgetauscht werden können.

Neben dem Verkauf von kompletten Interworking-Vorrichtungen an interessierte Betreiber kann es auch interessant sein, die beschriebenen Softwaremodule separat zu vertreiben, zum Beispiel mittels Datenträgern mit darauf gespeicherten Programmen zur Steuerung von Computern, beispielsweise handelsübliche Server, gemäss dem oben beschriebenen Verfahren.

## Patentansprüche

1. Verfahren um Signalisierungsdaten zwischen Mobilnetzen auszutauschen, in welchen Mobilnetzen die Signalisierungsdaten von einer ersten, mit einem ersten Mobilnetz verbundene Netzwerkeinheit (1) mittels Signalisierungssystemen an eine zweite, mit einem zweiten Mobilnetz verbundene Netzwerkeinheit (7) übermittelt werden, wobei Routinginformationen aus Protokolldateneinheiten des Signalisierungssystems des ersten Mobilnetzes extrahiert werden, wobei auf Grund der extrahierten Routinginformationen aus einer Routing-Tabelle (32, 52) eine Zieladresse in einem Internet-Netzwerk (4) bestimmt wird, und wobei die Signalisierungsdaten unter Verwendung der bestimmten Zieladresse über das Internet-Netzwerk (4) an die zweite Netzwerkeinheit (7) weitergeleitet werden, **dadurch gekennzeichnet,**
**dass** die Signalisierungsdaten von der ersten Netzwerkeinheit (1) über eine Signalisierungsverbindung (2) an eine Interworking-Vorrichtung (3, 5) übermittelt werden, die mit dem Signalisierungssystem des ersten Mobilnetzes verbünden ist,
**dass** die Routinginformationen durch die Interworking-Vorrichtung (3, 5) aus Protokolldateneinheiten der entgegengenommenen Signalisierungsdaten extrahiert werden.
**dass** die Zieladresse durch die Interworking-Vorrichtung (3, 5) bestimmt wird, und
**dass** die entgegengenommenen Signalisierungsdaten durch die Interworking-Vorrichtung (3, 5) direkt als Nutzdaten über das Internet-Netzwerk (4) an die zweite Netzwerkeinheit (7) weitergeleitet werden.

2. Verfahren gemäss vorhergehendem Anspruch, **dadurch gekennzeichnet, dass** die über das Internet-Netzwerk (4) übertragenen Nutzdaten durch eine zweite Interworking-Vorrichtung (5, 3) empfangen werden, und dass die empfangenen Nutzdaten durch die zweite Interworking-Vorrichtung (5, 3) zur Weiterleitung an die zweite Netzwerkeinheit (7) direkt als Signalisierungsdaten an das mit der zweiten Netzwerkeinheit (7) verbundene Signalisierungssystem weitergeleitet werden.

3. Verfahren gemäss einem der vorhergehenden Ansprüche, **dadurch gekennzeichnet, dass** die Routinginformationen aus MTP-Protokolldateneinheiten und/oder aus SCCP-Protokolldateneinheiten eines SS7-Signalisierungssystems extrahiert werden.

4. Verfahren gemäss einem der vorhergehenden Ansprüche, **dadurch gekennzeichnet, dass** von einer ersten Interworking-Vorrichtung (3, 5) zusätzlich Netzwerkmanagement-Informationen aus dem Signalisierungssystem erfasst werden, dass die Netzwerkmanagement-Informationen zusammen mit den Signalisierungsdaten direkt als Nutzdaten über das Internet-Netzwerk (4) übertragen werden, und dass über das Internet-Netzwerk (4) empfangene Netzwerkmanagement-Informationen In einer zweiten Interworking-Vorrichtung (5, 3) ausgewertet werden.

5. Verfahren gemäss einem der vorhergehenden Ansprüche, **dadurch gekennzeichnet, dass** mindestens eines der genannten Mobilnetze (1, 7) ein GSM-Netz oder ein UMTS-Netz ist, und dass die Signalisierungsdaten MAP-Meldungen umfassen.

6. Verfahren gemäss vorhergehendem Anspruch, **dadurch gekennzeichnet, dass** SCCP-Protokolldateneinheiten zusammen mit TCAP-Protokolldateneinheiten und MAP-Protokolldateneinheiten, die die MAP-Meldungen enthalten, als Nutzdaten übertragen werden.

7. Verfahren gemäss einem der vorhergehenden Ansprüche, **dadurch gekennzeichnet, dass** mindestens gewisse der Signalisierungsdaten zwischen einem Home Location Register (1) eines ersten Mobilnetzes und einem Visitor Location Register (7) eines zweiten Mobilnetzes ausgetauscht werden.

8. Verfahren gemäss vorhergehendem Anspruch, **dadurch gekennzeichnet, dass** mindestens gewisse der Signalisierungsdaten Roaming Informationen beinhalten.

9. Verfahren gemäss einem der vorhergehenden Ansprüche, **dadurch gekennzeichnet, dass** eine erste Interworking-Vorrichtung (3) mindestens gewisse Signalisierungsdaten direkt als Nutzdaten über UDP-IP (UDP, IP) oder über TCP-IP (TCP, IP) an eine zweite Interworking-Vorrichtung (5) überträgt.

10. Interworking-Vorrichtung (3, 5) für den Austausch von Signalisierungsdaten zwischen einem Mobilnetz und einem Internet-Netzwerk (4), welche eine Routing-Tabelle (32, 52) umfasst, welche Mittel umfasst um Routinginformationen aus Protokolldateneinheiten eines Signalisierungssystems des Mobilnetzes zu extrahieren und um auf Grund der extrahierten Routinginformationen aus der Routing-Tabelle (32, 52) eine Zieladresse im Internet-Netzwerk (4) zu bestimmen, und welche ein Internetmodul umfasst, um Nutzdaten über das Internet-Netzwerk (4) zu übertragen, respektive über dieses zu empfangen, **dadurch gekennzeichnet,**
**dass** sie ein Signalisierungsmodul umfasst, um die Signalisierungsdaten über eine Signalisierungsverbindung (2) direkt vom Signalisierungssystem des Mobilnetzes entgegenzunehmen, respektive an dieses weiterzuleiten, und
**dass** sie ein Relaismodul (31, 51) umfasst, um die Routinginformationen aus Protokolldateneinheiten der entgegengenommenen Signalisierungsdaten zu extrahieren, um die entgegengenommenen Signalisierungsdaten mittels des Intemetmoduls unter Verwendung der bestimmten Zieladresse direkt als Nutzdaten über das Internet-Netzwerk (4) zu übertragen, und um gewisse über das Internet-Netzwerk (4) empfangene Nutzdaten direkt als Signalisierungsdaten über die Signalisierungsverbindung (2) an das Signalisierungssystem (6, 2) weiterzuleiten.

11. Interworking-Vorrichtung (3, 5) gemäss vorhergehendem Anspruch, **dadurch gekennzeichnet, dass** die extrahierten Routinginformationen Routinginformationen aus MTP-Protokolldateneinheiten und/oder aus SCCP-Protokolldateneinheiten eines SS7-Signalisierungssystems sind.

12. Interworking-Vorrichtung (3, 5) gemäss einem der Ansprüche 10 oder 11, **dadurch gekennzeichnet, dass** das Signalisierungsmodul so eingerichtet ist, dass es zusätzlich Netzwerkmanagement-Informationen aus dem Signalisierungssystem erfassen kann, und dass das Relaismodul (31, 51) so eingerichtet ist, dass es vom Signalisierungsmodul erfasste Netzwerkmanagement-Informationen zusammen mit den Signalisierungsdaten direkt als Nutzdaten über das Internet-Netzwerk (4) übertragen, und über das Internet-Netzwerk (4) übertragene Netzwerkmanagement-Informationen empfangen und dem Signalisierungsmodul übergeben kann.

13. Interworking-Vorrichtung (3, 5) gemäss einem der Ansprüche 10 bis 12, **dadurch gekennzeichnet, dass** das Mobilnetz ein GSM-Netz oder UMTS-Netz ist und die Signalisierungsdaten MAP-Meldungen umfassen.

14. lnterworking-Vorrichtung (3, 5) gemäss vorhergehendem Anspruch, **dadurch gekennzeichnet, dass** die Nutzdaten SCCP- Protokolldateneinheiten, TCAP-Protokolldateneinheiten und MAP-Protokolldateneinheiten umfassen, wobei die MAP-Protokolldateneinheiten die MAP-Meldungen enthalten.

15. Interworking-Vorrichtung (3, 5) gemäss einem der Ansprüche 10 bis 14, **dadurch gekennzeichnet, dass** das Intemetmodul so eingerichtet ist, dass es Nutzdaten über UDP-IP (UDP, IP) und/oder üben TCP-IP (TCP, IP) übertragen kann.

## Claims

1. Method for exchanging signalling data between mobile networks, in which mobile networks the signalling data are transmitted, by means of signalling systems, from a first network unit (1), connected to a first mobile network, to a second network unit (7), connected to a second mobile network, routing information being extracted from protocol data units of the signalling system of the first mobile network, a destination address in an Internet network (4) being determined from a routing table on the basis of the extracted routing information, and the signalling data being forwarded to the second network unit (7) via the Internet network (4) using the determined destination address,
**characterised**
**in that** the signalling data are transmitted from the first network unit (1) via a signalling connection (2) to an interworking device (3, 5) which is connected to the signalling system of the first mobile network,
**in that** the routing information is extracted by the interworking device (3, 5) from protocol data units of the received signalling data,
**in that** the destination address is determined by the interworking device (3, 5), and
**in that** the received signalling data is forwarded by the interworking device (3, 5) directly as user data via the Internet network (4) to the second network unit (7).

2. Method according to the preceding claim, **characterised in that** the user data transmitted via the Internet network (4) are received by a second interworking device (5, 3), and **in that** the received user data are further transmitted by the second interworking device (5, 3) directly as signalling data to the signalling system connected to the second network unit (7) for forwarding to the second network unit (7).

3. Method according to one of the preceding claims, **characterised in that** the routing information is extracted from MTP protocol data units and/or from SCCP protocol data units of an SS7 signalling system.

4. Method according to one of the preceding claims, **characterised in that** in addition network management information is captured from the signalling system by a first interworking device (3, 5), **in that** the network management information together with the signalling data are transmitted directly as user data via the Internet network (4), and **in that** network management information received via the Internet network (4) is evaluated in a second interworking device (5, 3).

5. Method according to one of the preceding claims, **characterised in that** at least one of the said mobile networks (1, 7) is a GSM network or a UMTS network, and **in that** the signalling data comprise MAP messages.

6. Method according to the preceding claim, **characterised in that** SCCP protocol data units are transmitted as user data together with TCAP protocol data units and MAP protocol data units containing the MAP messages.

7. Method according to one of the preceding claims, **characterised in that** at least certain of the signalling data are exchanged between a Home Location Register (1) of a first mobile network and a Visitor Location Register (7) of a second mobile network.

8. Method according to the preceding claim, **characterised in that** at least certain of the signalling data contain roaming information.

9. Method according to one of the preceding claims, **characterised in that** a first interworking device (3) transmits at least certain signalling data directly as user data via UDP-IP (UDP, IP) or via TCP-IP (TCP, IP) to a second interworking device (5).

10. Interworking device (3, 5) for the exchange of signalling data between a mobile network and an Internet network (4), which comprises a routing table (32, 52), comprising means of extracting routing information from protocol data units of a signalling system of the mobile network and of determining from the routing table (32, 52) a destination address in the Internet network (4) on the basis of the extracted routing information, and comprising an Internet module in order to transmit user data via the Internet network (4) or respectively receive user data via the Internet network (4), **characterised**
**in that** it comprises a signalling module in order to receive the signalling data via a signalling connection (2) directly from the signalling system of the mobile network, or respectively to forward it thereto, and
**in that** it comprises a relay module (31, 51) in order to extract the routing information from the protocol data units of the received signalling data, in order to transmit the received signalling data directly as user data via the Internet network (4) by means of the Internet module using the determined destination address, and in order to forward to the signalling system (6, 2) directly as signalling data via the signalling connection (2) certain user data received via the Internet network (4).

11. Interworking device (3, 5) according to the preceding claim, **characterised in that** the extracted routing information is routing information from MTP protocol data units and/or from SCCP protocol data units of an SS7 signalling system.

12. Interworking device (3, 5) according to one of the claims 10 or 11, **characterised in that** the signalling module is set up such that it is able to capture in addition network management information from the signalling system, and **in that** the relay module (31, 51) is set up such that it is able to transmit, together with the signalling data, directly as user data via the Internet network (4), network management information captured by the signalling module and receive network management information transmitted via the Internet network (4) and pass it on to the signalling module.

13. Interworking device (3, 5) according to one of the claims 10 to 12, **characterised in that** the mobile network is a GSM network or UMTS network, and the signalling data comprise MAP messages.

14. Interworking device (3, 5) according to the preceding claim, **characterised in that** the user data comprise SCCP protocol data units, TCAP protocol data units and MAP protocol data units, the MAP protocol data units containing the MAP messages.

15. Interworking device (3, 5) according to one of the claims 10 to 14, **characterised in that** the Internet module is set up such that it is able to transmit user data via UDP-IP (UDP, IP) and/or via TCP-IP (TCP, IP).

## Revendications

1. Procédé pour l'échange de données de signalisation entre des réseaux mobiles, réseaux mobiles dans lesquels les données de signalisation sont transmises d'une première unité de réseau (1) reliée au premier réseau mobile au moyen de systèmes de signalisation à une seconde unité de réseau (7) reliéé au second réseau mobile, des informations de routage étant extraites des unités de données de protocoles du système de signalisation du premier réseau mobile, une adresse cible étant définie dans un réseau Internet (4)sur la base des informations de routage extraites d'un tableau de routage (32, 52), et les données de signalisation étant transmises à la seconde unité de réseau (7) par le biais du réseau Internet (4) en utilisant l'adresse cible définie, **caractérisé**
**en ce que** les données de signalisation sont transmises par une connexion de signalisation (2) depuis un première unité de réseau (1) à un dispositif d'interfonctionnement (3, 5) qui est relié au système de signalisation du premier réseau mobile,
**en ce que** les informations de routage sont extraites d'unités de données de protocoles des données de signalisation réceptionnées par le dispositif d'interfonctionnement (3, 5),
**en ce que** l'adresse cible est définie par le dispositif d'inter-fonctionnement (3, 5), et
**en ce que** les données de signalisation réceptionnées sont transmises à la seconde unité de réseau (7) par le dispositif d'interfonctionnement (3, 5) directement en tant que données utiles via le réseau Internet (4).

2. Procédé selon la revendication précédente **caractérisé en ce que** les données utiles transmises par le réseau Internet (4) sont reçues par un second dispositif d'interfonctionnement (5, 3) et **en ce que** les données utiles reçues sont transmises directement en tant que données de signalisation au système de signalisation relié à la seconde unité de réseau (7) par le second dispositif d'interfonctionnement (5, 3) pour la transmission à la seconde unité de réseau.

3. Procédé selon l'une des revendications précédentes, **caractérisé en ce que** les informations de routage sont extraites d'unités de données de protocole MTP (Multiple transfer protocol) et/ou d'unités de données de protocole SCCP (Signaling Connection Control Part) d'un système de signalisation SS7 (système de signalisation N° 7).

4. Procédé selon l'une des revendications précédentes, **caractérisé en ce qu'**un premier dispositif d'interfonctionnement (3, 5) saisit en supplément des informations de gestion de réseau issues du système de signalisation, **en ce que** les informations de gestion de réseau sont transmises ensemble en tant que données utiles par le réseau Internet (4), et **en ce que** les informations de gestion de réseau reçues par le réseau Internet (4) sont analysées dans un second dispositif d'interfonctionnement (5, 3).

5. Procédé selon l'une des revendications précédentes, **caractérisé en ce qu'**au moins l'un des réseaux mobiles (1, 7) est un réseau GSM ou un réseau UMTS et **en ce que** les données de signalisation comprennent des messages MAP (Mobile Application part).

6. Procédé selon l'une des revendications précédentes, **caractérisé en ce que** des unités de unités de données de protocole SCCP sont transmises en tant que données utiles ensemble avec des unité de données de protocole TCAP (Transaction Capability Application Part) et des unités de données de protocole MAP qui contiennent des messages MAP.

7. Procédé selon l'une des revendications précédentes, **caractérisé en ce qu'**au moins certaines des données de signalisation sont échangées entre un registre Home Location Registre (1) (base de données des abonnés) d'un premier réseau mobile et un Visitor Location Register (7) (registre de location des visiteurs) d'un second réseau mobile.

8. Procédé selon l'une des revendications précédentes, **caractérisé en ce qu'**au moins certaines des données de signalisation contiennent des informations d'itinérance (Roaming).

9. Procédé selon l'une des revendications précédentes, **caractérisé en ce qu'**un premier dispositif d'interfonctionnement (3) transmet au moins certaines données de signalisation directement en tant que données utiles à un second dispositif d'interfonctionnement (5) par UDP-IP (UDP,IP) (Unreliable Packet Delivery, Internet Protocol) ou par TCP-IP (TCP,IP) (Transmission control Protocol, Internet Protocol).

10. Dispositif d'interfonctionnement (3, 5) pour l'échange de données de signalisation entre un réseau mobile et un réseau Internet (4) lequel comprend un tableau de routage (32, 52) qui comprend des moyens pour extraire des informations de routage d'unités de données de protocole d'un système de signalisation du réseau mobile et pour définir sur la base des informations de routage extraites du tableau de routage (32, 52) une adresse cible dans le réseau Internet (4) et lequel comprend un module Internet pour recevoir et transmettre des données utiles par le réseau Internet (4), **caractérisé**
**en ce qu'**il comprend un module de signalisation pour réceptionner les données de signalisation par une connexion de signalisation (2) directement du système de signalisation du réseau mobile et respectivement lui transmettre, et
**en ce qu'**il comprend un module relais (31, 51) pour extraire les informations de routage d'unités de données de protocole des données de signalisation réceptionnées, pour transmettre les données de signalisation réceptionnées directement en tant que donnes utiles au réseau Internet (4) au moyen du module Internet en utilisant l'adresse cible définie et pour transmettre certaines données utiles reçues en tant que données de signalisation via le réseau Internet (4) par la connexion de signalisation (2) au système de signalisation (6, 2).

11. Dispositif d'interfonctionnement (3, 5) selon la revendication précédente, **caractérisé en ce que** les informations de routage extraites sont des informations de routage issues d'unités de données de protocole MTP et/ou d'unités de données de protocole SCCP d'un système de signalisation SS7.

12. Dispositif d'interfonctionnement (3, 5) selon l'une des revendications 10 ou 11, **caractérisé en ce que** le module de signalisation est agencé de sorte qu'il peut saisir en supplément des informations de gestion de réseau issues du système de signalisation et **en ce que** le module relais (31, 51) est configuré de sorte qu'i peut transmettre par l'intermédiaire du réseau Internet (4) des informations de gestion de réseau saisies par le module de signalisation ensemble avec les données de signalisation directement en tant que données utiles et peut recevoir par le réseau Internet des informations de gestion de réseau transmises par le réseau Internet (4) et peut les transmettre au module de signalisation.

13. Dispositif d'interfonctionnement (3, 5) selon l'une des revendications 10 à 12, **caractérisé en ce que** le réseau mobile est un réseau GSM (Global System for Mobil Telecommunication) ou UMTS (Universal Mobile Télécommunication System) et les données de signalisation comprennent des messages MAP.

14. Dispositif d'interfonctionnement (3, 5) selon l'une des revendications précédentes, **caractérisé en ce que** les données utiles comprennent des unités de données de protocole SCCP, des unités de données de protocole TCAP, et des unités de données de protocole MAP, les unités de données de protocole MAP contenant les messages MAP.

15. dispositif d'interfonctionnement (3, 5) selon l'une des revendications 10 à 14, **caractérisé en ce que** le module d'Internet est configurée de sorte qu'il peut transmettre des données utiles par UDP-IP (UDP, IP) et/ou par TCP-IP (TCP, IP).
